(19) Europäisches Patentamt
European Patent Office
Office européen des brevets

(11) **EP 4 223 505 A1**

(12) **EUROPEAN PATENT APPLICATION**
published in accordance with Art. 153(4) EPC

(43) Date of publication:
**09.08.2023 Bulletin 2023/32**

(21) Application number: **21875737.5**

(22) Date of filing: **29.09.2021**

(51) International Patent Classification (IPC):
*B32B 9/00* (2006.01)      *B32B 27/36* (2006.01)
*G09F 3/02* (2006.01)      *G09F 3/10* (2006.01)
*C08J 5/18* (2006.01)      *C08J 7/043* (2020.01)

(52) Cooperative Patent Classification (CPC):
**B32B 9/00; B32B 27/36; C08J 5/18; C08J 7/043;
G09F 3/02; G09F 3/10**

(86) International application number:
**PCT/JP2021/035984**

(87) International publication number:
**WO 2022/071440 (07.04.2022 Gazette 2022/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.10.2020 JP 2020167142**

(71) Applicant: **TOYOBO CO., LTD.
Osaka-shi
Osaka 5300001 (JP)**

(72) Inventors:
• **KAWAI Kiwamu
Tsuruga-shi, Fukui 914-8550 (JP)**
• **SHIMIZU Akira
Tsuruga-shi, Fukui 914-8550 (JP)**
• **TAKII Isao
Otsu-shi, Shiga 520-0292 (JP)**

(74) Representative: **Vossius & Partner
Patentanwälte Rechtsanwälte mbB
Siebertstraße 3
81675 München (DE)**

(54) **BIAXIALLY ORIENTED POLYESTER FILM**

(57)    [Problem] To provide: a biaxially oriented polyester film which has achieved a good balance among moldability during hot molding, film strength and elasticity, while suppressing deposition of an oligomer (whitening) due to heating in a coating step of an adhesive resin or the like during the molding process, and which is capable of producing a molded body, a label or the like without deteriorating the quality; and a molded member which uses this biaxially oriented polyester film.

[Solution] A biaxially oriented polyester film wherein: the content of an ester constituent unit derived from an isophthalic acid component relative to 100% by mole of all ester constituent units in the constituent polyester resin is from 0.5% by mole to 5.0% by mole; the amount of haze change of the film when heated at 150°C for 30 minutes is 5.0% or less; the limiting viscosity of the constituent polyester resin is from 0.59 dl/g to 0.65 dl/g; the average storage elastic modulus at 150°C is from $5.0 \times 10^8$ (Pa) to $7.6 \times 10^8$ (Pa); and the acid value of the film is from 40 eq/ton to 60 eq/ton.

EP 4 223 505 A1

**Description**

TECHNICAL FIELD

The present invention relates to a polyester film excellent in thermoformability and elasticity. The present invention preferably relates to a polyester film obtained using a polyester resin raw material recycled from PET bottles, and a polyester film that is excellent in thermoformability as well as can suppress oligomer precipitation (whitening) in heating steps during thermoforming and in coating/drying of adhesive resins and the like, and enables production of formed products, labels and the like without impairing quality.

BACKGROUND ART

Aromatic polyesters typified by polyethylene terephthalate (PET) exhibit excellent mechanical properties, heat resistance, chemical resistance and the like, are inexpensive resins, and thus are widely used as formed articles such as fibers and films. Aromatic polyesters are also excellent in terms of hygiene and thus are also widely used as food containers, particularly as containers for beverages. Aromatic polyesters are also crystalline resins, thus have a high elastic modulus, are excellent in elasticity as films, and are widely used for various label applications. However, the followability of polyester resins is not always sufficient in thermoforming using molds and the like, and improvement thereof has been desired.

Therefore, in order to improve formability while taking advantage of the excellent properties of polyester resins, for example, a large number of studies have been carried out to soften the polyester resins and enhance formability by copolymerizing glycol components including branched aliphatic glycols and alicyclic glycols and introducing the copolymers into the main chains (see Patent Documents 1 to 3, for example). However, the strength and elasticity of these polyester resins are diminished while the formability thereof is improved, it cannot be said that these properties are well-balanced, and these polyester resins have a drawback that the applications thereof are limited. These have not been satisfactorily used for applications required to exhibit high elasticity such as self-supporting POP labels.

PRIOR ART DOCUMENTS

PATENT DOCUMENTS

Patent Document 1: JP-A-2004-075713
Patent Document 2: JP-A-2005-068238
Patent Document 3: JP-A-2005-186364

SUMMARY OF THE INVENTION

PROBLEMS TO BE SOLVED BY THE INVENTION

An object of the present invention is to solve the problems of the prior art and to provide a biaxially oriented polyester film, which satisfies all of the formability during thermoforming, film strength and elasticity, suppresses oligomer precipitation (whitening) by heating during forming and in a coating step of an adhesive resin and the like, and enables production of a formed product, a label and the like without impairing quality, and a formed product including the same.

MEANS FOR SOLVING THE PROBLEMS

In other words, the present invention has the following configurations.

1. A biaxially oriented polyester film that satisfies the following (1) to (4):

(1) a content rate of an ester constituting unit derived from an isophthalic acid component is 0.5 mol% or more and 5.0 mol% or less with respect to 100 mol% of all ester constituting units in all polyester resins constituting the biaxially oriented polyester film;
(2) an amount of change in haze of the film, Δhaze {Δhaze = (haze after heating) - (haze before heating) } is 5.0% or less when the film is heated at 150°C for 30 minutes;
(3) a limiting viscosity of the polyester film is 0.59 dl/g or more and 0.65 dl/g or less;

(4) a storage modulus at 150°C is $5.0 \times 10^8$ [Pa] or more and $7.6 \times 10^8$ [Pa] or less as an average value of storage moduli in a machine direction and a transverse direction of the film when the polyester film having a width of 5 mm is gripped at an interval of 30 mm and measurement is performed using a dynamic viscoelasticity measuring instrument under conditions of a tensile mode, a frequency of 10 Hz, and a rate of temperature increase of 5°C/min; and

(5) the biaxially oriented polyester film has an acid value of 40 eq/ton or more and 60 eq/ton or less.

2. The biaxially oriented polyester film according to 1, in which a polyester resin recycled from PET bottles is contained at 50% by mass or more and 100% by mass or less with respect to 100% by mass of all polyester resins contained in the film.

3. The biaxially oriented polyester film according to 1 or 2, having a resin layer containing at least one resin selected from a polyester-based resin, a polyurethane-based resin, or an acrylic resin on at least one surface of the polyester film.

4. The biaxially oriented polyester film according to any one of 1 to 3, in which a change in film oxidation per 10,000 m in a machine direction is 2 eq/ton or less.

5. A formed product including the biaxially oriented polyester film according to any one of 1 to 4.

6. An adhesive label having an adhesive layer on at least one surface of the biaxially oriented polyester film according to any one of 1 to 4.

7. A label having an aluminum deposited layer on at least one surface of the biaxially oriented polyester film according to any one of 1 to 4.

EFFECT OF THE INVENTION

The present invention is excellent in thermoformability as well as has less oligomer precipitation (whitening) under heating during forming and in the coating step of an adhesive resin and the like. Furthermore, it is possible to suppress a decrease in appearance quality and a decrease in productivity due to mold contamination. In addition, since elasticity is also excellent, it is possible to provide a biaxially oriented polyester film that is suitably used for formed products that are required to maintain their shapes and various POP adhesive labels with an upright display portion.

MODE FOR CARRYING OUT THE INVENTION

Hereinafter, embodiments of the present invention will be described in detail.

(Polyester Film)

The polyester film in the present invention may be a film having a single layer configuration or a film having a multilayer configuration. The polyester film may be a film composed of one or more polyester resins, or may be a polyester film containing two or more polyester resins in an aspect of multilayer configuration. The polyester film in the present invention may have, for example, a structure having first skin layer/core layer/second skin layer.

As the polyester resin constituting the film, a polyester resin is used of which the main constituent is polyethylene terephthalate, in which the content rate of an ester constituting unit derived from an isophthalic acid component is 0.5 mol% or more and 5.0 mol% or less with respect to 100 mol% of all ester constituting units in the polyester resin as a dicarboxylic acid component of the polyester, and which contains an ester constituting unit derived from an arbitrary diol component typified by ethylene glycol or diethylene glycol as another component. Hereinafter, the ester constituting unit derived from an isophthalic acid component is simply referred to as an isophthalic acid component in some cases . The other component may be an ester constituting unit derived from a terephthalic acid component.

The content rate of the ester constituting unit derived from an isophthalic acid component is 0.5 mol% or more, more preferably 0.7 mol% or more, still more preferably 0.9 mol% or more. A content rate of 0.5 mol% or more is preferable since thermoformability is favorable. The content rate of the ester constituting unit derived from an isophthalic acid component is 5.0 mol% or less, more preferably 4.0 mol% or less, still more preferably 3.5 mol% or less. A content rate of 5.0 mol% or less is preferable since the decrease in crystallinity is small and the thermal shrinkage is low.

In the polyester film of the present invention, the limiting viscosity of at least one or more resins contained in the film is preferably in a range of 0.57 to 1.0 dl/g. It is preferable that the limiting viscosity is 0.57 dl/g or more since the obtained film is less likely to break and film fabrication is stably performed. Meanwhile, it is preferable that the limiting viscosity is 1.0 dl/g or less since the increase in filtration pressure of the molten fluid is not too large and film fabrication is stably performed.

In an aspect, the limiting viscosity of at least one or more resins contained in the film is preferably 0.59 dl/g or more and 0.8 dl/g or less.

Regardless of whether the film has a single layer configuration or a laminated configuration, the limiting viscosity of the film is preferably 0.59 dl/g or more as a whole. The limiting viscosity of the film is still more preferably 0.60 dl/g or more as a whole. It is preferable that the limiting viscosity of the film is 0.59 dl/g or more as a whole since it is possible to suppress thermal deterioration during thermoforming and to maintain the strength and elastic modulus of the formed product.

Meanwhile, a film having a limiting viscosity of 0.65 dl/g or less as a whole film is preferable since the film can be fabricated with favorable workability. A film having a limiting viscosity of 0.65 dl/g or less as a whole film is preferable since the film is also excellent in thermoformability.

In an aspect, the limiting viscosity of the film is 0.60 dl/g or more and 0.65 dl/g or less as a whole.

In the present invention, it is preferable to use a polyester resin recycled from PET bottles. The lower limit of the content rate of a polyester resin recycled from PET bottles with respect to the polyester film is preferably 50% by mass, more preferably 60% by mass, still more preferably 70% by mass. It is preferable that the content rate is 50% by mass or more since the formability becomes favorable by copolymerization of the isophthalic acid component of the polyester. Furthermore, in terms of utilization of recycled resin, a high content rate is preferable from the viewpoint of contribution to environmental protection. The upper limit of the content rate of a polyester resin recycled from PET bottles is preferably 100% by mass.

The thickness of the polyester film is preferably 38 to 200 $\mu$m, more preferably 50 to 190 $\mu$m. When the thickness is 38 $\mu$m or more, the elasticity as a film is improved, and the effect of improving the shape maintenance as a formed product or label is observed. When the thickness is 200 $\mu$m or less, it is advantageous for weight saving and the polyester film is excellent in flexibility, workability, handleability, and the like.

In a case where the film has a multilayer structure, the total thickness of the respective layers may fall within the above range.

The surface of the polyester film of the present invention may be smooth or have irregularities. It is preferable to form irregularities in order to impart a certain degree of slipperiness from the viewpoint of handleability. The haze is preferably 5% or less, more preferably 3% or less, most preferably 2% or less. A haze of 5% or less is suitable for cases where formed products and labels are required to be transparent. The lower limit of haze is not limited, but may be 0.1% or more, or 0.3% or more.

As a method for forming irregularities on the polyester surface, particles may be blended in the polyester resin layer of the outer layer or irregularities may be formed by applying a resin solution containing particles during film formation.

A known method may be adopted as a method for blending particles in the polyester resin. For example, particles may be added at an arbitrary stage in the production of polyester, but it is preferable to add particles as a slurry dispersed in ethylene glycol or the like at the stage of esterification or at the stage after the termination of transesterification reaction and before the start of polycondensation reaction and to conduct the polycondensation reaction. Particles may also be blended by a method in which a slurry of particles dispersed in ethylene glycol, water or the like is blended with a polyester raw material using a kneading extruder with a vent, a method in which dried particles are blended with a polyester raw material using a kneading extruder, or the like.

Among these, a method is preferable in which one obtained by homogenously dispersing inorganic particles of aggregates in a monomer liquid to be a part of the polyester raw material and then filtering the dispersion is added to the rest of the polyester raw material before, during, or after the esterification reaction. According to this method, since the monomer liquid has a low viscosity, homogenous dispersion of particles and high-precision filtration of slurry may be easily performed as well as particles exhibit favorable dispersibility when added to the rest of the raw material and new aggregates are less likely to be generated. From this point of view, it is particularly preferable to add particles to the rest of the raw material in a low temperature state before the esterification reaction.

As the kind of particles to be blended, in addition to inorganic lubricants such as silica, calcium carbonate and alumina, heat resistant organic particles may be preferably used. Among these, silica and calcium carbonate are more preferable. The transparency and slipperiness may be exerted by these lubricants.

The polyester film may contain various additives as long as the preferable range of total light transmittance is maintained. Examples of the additives include an antistatic agent, an UV absorber, and a stabilizer.

The total light transmittance of the polyester film is preferably 85% or more, more preferably 87% or more. When the transmittance is 85% or more, the visibility may be sufficiently secured. It can be said that it is more preferable as the total light transmittance of the polyester film is higher, but the total light transmittance may be 99% or less, or 97% or less.

The surface of the polyester film of the present invention may be subjected to a treatment for improving close adhesive properties to the resin that forms a hard coat layer or to the ink layer.

Examples of the surface treatment method include sandblasting, solvent treatment and the like to form irregularities, corona discharge treatment, electron beam irradiation treatment, plasma treatment, ozone/ultraviolet irradiation treatment, flame treatment, chromic acid treatment, and oxidation treatment such as hot air treatment, which may be used without particular limitation.

Close adhesive properties may also be improved by providing an easily adhesive resin layer on the surface of the polyester film. As the easily adhesive resin layer, polyester-based resins, polyurethane-based resins, acrylic resins, polyether-based resins, and the like may be used without particular limitation. A crosslinked structure may be formed in order to improve the close adhesion durability of these easily adhesive layers. By containing a crosslinking agent, it is possible to further improve close adhesive properties at a high temperature and a high humidity. Specific examples of the crosslinking agent include urea-based, epoxy-based, melamine-based, isocyanate-based, oxazoline-based, and carbodiimide-based crosslinking agents. In order to promote a crosslinking reaction, a catalyst and the like may be appropriately used, if necessary.

The easily adhesive resin layer may contain lubricant particles in order to impart slipperiness to the surface. The particles may be inorganic particles or organic particles, and are not particularly limited, but examples thereof include (1) inorganic particles such as silica, kaolinite, talc, light calcium carbonate, heavy calcium carbonate, zeolite, alumina, barium sulfate, carbon black, zinc oxide, zinc sulfate, zinc carbonate, zirconium oxide, titanium dioxide, aluminum silicate, diatomaceous earth, calcium silicate, aluminum hydroxide, calcium carbonate, magnesium carbonate, calcium phosphate, magnesium hydroxide, and barium sulfate, and (2) organic particles such as acrylic or methacrylic, vinyl chloride-based, vinyl acetate-based, nylon, styrene/acrylic, styrene/butadiene-based, polystyrene/acrylic, polystyrene/isoprene-based, polystyrene/isoprene-based, methyl methacrylate/butyl methacrylate-based, melamine-based, polycarbonate-based, urea-based, epoxy-based, urethane-based, phenol-based, diallyl phthalate-based, and polyester-based particles, but silica is particularly preferably used in order to impart proper slipperiness to the coating layer.

The average particle diameter of particles is preferably 10 nm or more, more preferably 20 nm or more, and still more preferably 30 nm or more. It is preferable that the average particle diameter of particles is 10 nm or more since the particles are less likely to aggregate and slipperiness may be secured.

The average particle diameter of the particles is preferably 1000 nm or less, more preferably 800 nm or less, still more preferably 600 nm or less. It is preferable that the average particle diameter of the particles is 1000 nm or less since the transparency is maintained and the particles do not fall off.

The acid value of the polyester film is 40 eq/ton or more, more preferably 43 eq/ton or more, for example 45 eq/ton or more, still more preferably 47 eq/ton or more, for example 49 eq/ton or more from the viewpoint of further improving the close adhesive properties between the film and the resin forming a hard coat layer and the easily adhesive resin layer coated with an ink layer. Meanwhile, the acid value is 60eq/ton or less. When the acid value exceeds 60 eq/ton, problems such that the film is likely to deteriorate arise.

The method for measuring the acid value of the polyester film is as described below.

Here, the acid value of the polyester film of the present invention may be derived from the fact that the content rate of the ester constituting unit derived from an isophthalic acid component is 0.5 mol% or more and 5.0 mol% or less with respect to 100 mol% of all ester constituting units in all polyester resins constituting the biaxially oriented polyester film.

The change in acid value per 10,000 m in the machine direction of the polyester film is preferably 2 eq/ton or less from the viewpoint of film forming stability and quality stability. In the present invention, since the change in acid value indicates such conditions, the close adhesive properties between the film and the resin forming a hard coat layer and the easily adhesive resin layer coated with an ink layer may be further improved. Furthermore, not only favorable close adhesive properties may be maintained after the polyester film has been wound but also stable quality may be maintained and disposal of film may be diminished.

(Properties of polyester film)

When the polyester film of the present invention is heated at 150°C for 30 minutes, the amount of change in haze of the film, Δhaze {Δhaze = (haze after heating) - (haze before heating) } is preferably 5.0% or less, for example, 2.0% or less, more preferably 1.5% or less, still more preferably 1.0% or less.

It is preferable that the Δhaze is 5.0% or less since oligomer precipitation is suppressed during thermoforming of the film, the mold is hardly contaminated, and there is no possibility that the formed product whitens and decrease the appearance quality. In particular, it is preferable that the Δhaze is 2.0% or less since oligomer precipitation is suppressed when functional resins such as an adhesive are applied/dried, and functionality such as stickiness is effectively exerted. It is more preferable as the Δhaze is smaller, and the lower limit of Δhaze is 0%, for example, 0.01 or more.

The storage modulus at 150°C is $5.0 \times 10^8$ [Pa] or more and $7.6 \times 10^8$ [Pa] or less as an average value of storage moduli in the machine direction (MD direction) and transverse direction (TD direction) of the film when the polyester film of the present invention is subjected to the measurement at a width of 5 mm and a grip interval of 30 mm using a dynamic viscoelasticity measuring instrument under conditions of a tensile mode, a frequency of 10 Hz, and a rate of temperature increase of 5°C/min. In a case where the polyester film has a storage modulus within the above range, the polyester film may be properly deformed during thermoforming and the forming followability is favorable. When the storage modulus is less than the lower limit, deformation occurs during thermoforming and the amount of protrusion tends to increase. When the storage modulus exceeds the upper limit, the thermoforming followability decreases.

In an aspect, the storage modulus at 150°C is $5.5 \times 10^8$ [Pa] or more and $7.6 \times 10^8$ [Pa] or less, for example, $5.9 \times 10^8$ [Pa] or more and $7.6 \times 10^8$ [Pa] or less. As the storage modulus is in such a range, the effects are more likely to be exerted.

(Method for fabricating polyester film)

Next, the method for fabricating the polyester film will be described in detail, but the method is not limited to these. The method does not limit the number of layers, such as a single layer configuration and a multilayer configuration.

Polyester resin pellets are mixed at a predetermined proportion and dried, then supplied into a known extruder for melt lamination, extruded into a sheet shape from a slit-shaped die, and cooled and solidified on a casting drum to form an unstretched film. In the case of a single layer, one extruder is sufficient. However, in the case of fabricating a film having a multilayer configuration, using two or more extruders and two or more layers of manifolds or joining blocks (for example, joining blocks with square joining sections), a plurality of film layers constituting each outermost layer may be laminated, a sheet composed of two or more layers may be extruded from the mouthpieces, and cooled on a casting drum to form an unstretched film.

In this case, during melt extrusion, it is preferable to perform high-precision filtration in order to remove foreign substances contained in the resin at an arbitrary location where the molten resin is kept at about 280°C. The filter medium used for high-precision filtration of molten resin is not particularly limited, but a filter medium composed of sintered stainless steel is preferable since the filter medium is excellent in removing aggregates mainly composed of Si, Ti, Sb, Ge, and Cu and organic substances having high melting points.

Furthermore, the size of particles filtered through the filter medium (initial filtration efficiency of 95%) is preferably 50 $\mu$m or less, particularly preferably 20 $\mu$m or less . When the size of particles filtered through the filter medium (initial filtration efficiency of 95%) exceeds 50 $\mu$m, foreign substances having a size of 50 $\mu$m or more may not be sufficiently removed. It is preferable to perform high-precision filtration on the molten resin using a filter medium affording a size of particles filtered through the filter medium (initial filtration efficiency of 95%) of 50 $\mu$m or less for obtaining a film with few projections due to coarse particles although the productivity may decrease in this case.

More specifically, as described above, PET pellets containing particles intended to impart easy lubricating properties are sufficiently vacuum-dried, then supplied into an extruder, melt extruded into a sheet shape at about 280°C, and cooled and solidified to form an unstretched PET sheet. The obtained unstretched sheet is stretched 2.5 to 5.0 times in the machine direction using rolls heated to 80°C to 120°C to obtain a uniaxially oriented PET film.

As the method for providing an easily adhesive resin layer on the surface of the polyester film, a coating liquid may be applied to at least one surface of the polyester film to form the easily adhesive resin layer at any stage in the polyester film fabricating process. For example, after a uniaxially oriented PET film is obtained, the easily adhesive resin layer may be formed on one surface or both surfaces of the polyester film. The solid concentration in the resin composition in the coating liquid is preferably 2% to 35% by mass, particularly preferably 4% to 15% by mass.

As the method for providing the easily adhesive resin layer on the surface of the polyester film, the easily adhesive resin layer may be formed by a coating technique in a known arbitrary method. Examples thereof include a reverse roll-coating method, a gravure coating method, a kiss coating method, a reverse kiss coating method, a die coating method, a roll brushing method, a spray coating method, an air knife coating method, a wire bar coating method, a pipe doctor method, an impregnation coating method, and a curtain coating method. The application may be performed using these methods singly or in combination.

Next, the ends of the film are gripped with clips, and the film is guided to a hot air zone heated to 80°C to 180°C, preheated, and then stretched 2.5 to 5.0 times in the transverse direction. Subsequently, the stretched film is guided to a heat treatment zone at 160°C to 240°C and subjected to a heat treatment for 1 to 60 seconds to complete the crystalline orientation. During this heat treatment step, a relaxation treatment of 1% to 12% may be performed in the transverse direction or the machine direction, if necessary.

The biaxially oriented polyester film according to the present invention is suitably used for thermoforming using a mold. In a case of mold forming is performed using the biaxially oriented polyester film of the present invention, since oligomer precipitation (whitening) less occur even under heating during forming compared to a case of using a conventional polyester film, a decrease in appearance quality and a decrease in productivity due to mold contamination may be suppressed. Forming is possible at a low forming temperature, and there is a remarkable effect that the finishing properties of the formed article is improved. Furthermore, the formed article formed in this way exhibits excellent elasticity and shape stability when used in a normal temperature atmosphere. Moreover, the formed article may be suitably used as formed members such as nameplates for household appliances, nameplates for motor vehicles, dummy cans, building materials, decorative plates, decorative steel plates, and transfer sheets since the burden on the environment is small.

Since the biaxially oriented polyester film of the present invention has little oligomer precipitation (whitening) even under heating in the coating step of an adhesive resin and the like, a decrease in appearance quality does not occur, and the film is useful for an application of adhesive labels that are used by being attached to articles such as plastic formed articles, steel plates, and cans. The film also exhibits excellent elasticity, and is particularly useful for an application of POP adhesive labels with an upright display portion, which are required to maintain their shape stability. Since the film has various favorable printabilities and favorable close adhesive properties to an adhesive, it is possible to provide an adhesive label which is excellent in appearance and design and is also excellent in close adhesive properties between the adhesive layer and the article and durability.

For example, the adhesive label is a label having an adhesive layer on at least one surface of the biaxially oriented polyester film.

In an aspect, the present invention provides a label having an aluminum deposited layer on at least one surface of the biaxially oriented polyester film described above.

EXAMPLES

Next, the present invention will be described using Examples and Comparative Examples. First, the evaluation methods of property values used in the present invention are presented below.

(1) Content rates of ester constituting units derived from terephthalic acid and isophthalic acid contained in raw material polyester and polyester constituting film

A sample solution was prepared by dissolving a sample in a mixed solution of heavy chloroform and trifluoroacetic acid (volume ratio: 9/1), and proton NMR was measured using NMR ("GEMINI-200" manufactured by Varian). The peak intensity of a predetermined proton was calculated, and the content rate (mol%) of the terephthalic acid-derived ester constituting unit and the isophthalic acid-derived ester constituting unit in 100 mol% of the ester constituting units was calculated.

(2) Haze

Measured in conformity with JIS K 7136 "Determination of haze of transparent plastic materials". A haze meter NDH5000 manufactured by Nippon Denshoku Industries Co., Ltd. was used as a measuring instrument.

(3) Evaluation of amount of change in haze (Δhaze)

The film was cut into 50 mm squares, and the haze before heating was measured in conformity with JIS K 7136 "Determination of haze of transparent plastic materials". A haze meter NDH5000 manufactured by Nippon Denshoku Industries Co., Ltd. was used as a measuring instrument. After measurement, the film was set in an oven heated to 150°C and taken out after an elapse of 30 minutes, and the haze of the film after subjected to the heating was measured in the same manner as above to acquire the haze after heating. The difference in haze before and after heating was defined as Δhaze.

$$\Delta\text{haze (\%)} = (\text{haze after heating}) - (\text{haze before heating})$$

(4) Limiting viscosity

The film or polyester resin was crushed, dried, and then dissolved in a mixed solvent of phenol/tetrachloroethane = 60/40 (mass ratio). This solution was centrifuged to remove inorganic particles, the flow time of the solution having a concentration of 0.4 (g/dl) at 30°C and the flow time of only the solvent were measured using an Ubbelohde viscometer, the limiting viscosity was calculated from the ratio of these times using the Huggins equation assuming that the Huggins constant is 0.38. In the case of a laminated film, the limiting viscosity of each layer alone was evaluated by scraping off the corresponding polyester layer of the film according to the laminated thickness.

(5) Storage modulus

The storage modulus (E') of the film in the machine direction (MD direction) and transverse direction (TD direction) at 150°C was determined using a dynamic viscoelasticity measuring instrument (DVA225 manufactured by IT KEISOKUSEIGYO Co., Ltd.) under the following conditions. The measurement was performed in a tensile mode.

(a) Sample width: 5 mm (b) Sample grip interval: 30 mm

(c) Measured temperature range: 20°C to 250°C (d) Frequency: 10 Hz
(e) Rate of temperature increase: 5°C/min

(6) Mold formability

After printing was performed on the easily adhesive resin layer surface of the film, the film was hot-pressed in a stainless steel mold at 160°C. The pressing pressure was set to 5 kgf/cm$^2$, and the hot pressing was performed continuously 20 times for 30 seconds each time. The shape of the mold was a cup shape, the opening had a diameter of 50 mm, the bottom had a diameter of 40 mm, the mold had a depth of 10 mm, and all the corners were curved with a diameter of 0.5 mm. The formability, finishing properties, and degree of contamination of the mold were evaluated for a formed article obtained using a mold, and ranked according to the following criteria. Here, ○ indicates pass, and △ and × indicate failure.

○: No cracks or wrinkles in formed article and no mold contamination (visually observed) after continuous forming
△: Slight wrinkles in formed article and slight mold contamination (visually observed) after continuous forming
×: Cracks in formed article or no cracks but wrinkles in formed article, and mold contamination (visually observed) after continuous forming

(7) Acid value

(Sample preparation)

A sample was crushed, vacuum-dried at 70°C for 24 hours, and weighed in a range of 0.20 ± 0.0005 g using a balance. The mass at that time was denoted as W (g). Into a test tube, 10 ml of benzyl alcohol and the weighed sample were added, the test tube was immersed in a benzyl alcohol bath heated to 205°C, and the sample was dissolved while the solution was stirred with a glass rod. Samples when the dissolution time was set to 3 minutes, 5 minutes, and 7 minutes were denoted as A, B, and C, respectively. Next, a new test tube was prepared, only benzyl alcohol was charged in the test tube and treated according to the same procedure, and samples when the dissolution time was set to 3 minutes, 5 minutes, and 7 minutes were denoted as a, b, and c, respectively.

(Titration)

Titration is performed using a 0.04 mol/l potassium hydroxide solution (ethanol solution) of which the factor is known in advance. Phenol red is used as the indicator, and the titer (ml) of the potassium hydroxide solution is determined by taking a point at which the color changes from yellowish green to light red as the end point. The titers of samples A, B, and C are denoted as XA, XB, and XC (ml) , respectively. The titers of samples a, b, and c are denoted as Xa, Xb, and Xc (ml), respectively.

(Calculation of acid value)

The titer V (ml) at the dissolution time of 0 minutes was determined by the method of least squares using the titers XA, XB, and XC for the corresponding dissolution times. Similarly, the titer V0 (ml) was determined using Xa, Xb, and Xc. Next, the acid value was determined according to the following equation. The values presented in Table 2 are average values of measurement results of acid value.

$$\text{Acid value (eq/ton)} = [(V - V0) \times 0.04 \times NF \times 1000]/W$$

NF: Factor of 0.04 mol/potassium hydroxide solution
W: Sample weight (g)

(8) Close adhesive properties to UV ink

Printing was performed on the coating liquid (D) applied layer of the polyester film using UV ink [manufactured by T&K TOKA Corporation, trade name "BEST CURE UV161 Indigo S"] and a printing machine [trade name "RI Tester" manufactured by Mei Seisakusho Co., Ltd.]. Next, the film coated with the ink layer was irradiated with ultraviolet rays at 40 mJ/cm$^2$ using a high pressure mercury lamp to cure the ultraviolet curing ink. Next, using a cutter guide having a gap interval of 2 mm, 100 square-shaped cuts, which penetrate the ink layer and reach the film substrate, are made on the ink layer surface. Next, cellophane adhesive tape (No. 405 manufactured by NICHIBAN Co., Ltd.; width of 24 mm) is attached to the square-shaped cut surface and completely stuck by being rubbed with an eraser. After that, the cellophane adhesive tape is vertically peeled off from the ink layer surface of the ink laminated film, the number of squares peeled off from the ink layer or coating liquid (D) applied layer surface of the ink laminated film is visually counted, and the close adhesive properties between the ink layer or coating liquid (D) and the film substrate is determined from the following equation. Among the squares, a square that is partially peeled off is also counted as a square peeled off. It is regarded as pass when the close adhesive properties to ink is 100 (%) .

(9) Film acid value distribution in machine direction

The film acid value at 10000 m in the machine direction of the obtained polyester film was measured at 5 points at intervals of 2000 m, and the maximum value - (minus) the minimum value of the measured values was calculated.

(Production of polyethylene terephthalate resin (I))

The temperature of the esterification reactor was raised, and at the time point at which the temperature reached 200°C, 86.4 parts by mass of terephthalic acid and 64.6 parts by mass of ethylene glycol were charged, and 0.017 parts by mass of antimony trioxide, 0.064 parts by mass of magnesium acetate tetrahydrate, and 0.16 parts by mass of triethylamine were charged as catalysts while stirring was performed. The temperature was then increased under pressure, and the pressure esterification reaction was conducted at a gauge pressure of 0.34 MPa and 240°C, the pressure in the esterification reactor was returned to normal pressure, and 0.014 parts by mass of phosphoric acid was added. Furthermore, the temperature was raised to 260°C over 15 minutes, and 0.012 parts by mass of trimethyl phosphate was added. After 15 minutes, dispersion treatment was performed using a high pressure disperser, 0.1% by mass of sodium tripolyphosphate aqueous solution as sodium atoms was further added to the silica particles, and 35% of coarse particles were cut by centrifugal separation, an ethylene glycol slurry of silica particles, which were filtered through a metal filter having an opening of 5 $\mu$m and had an average particle diameter of 2.5 $\mu$m, was added at 0.2 parts by mass as a particle content. After 15 minutes, the obtained esterification reaction product was transferred to a polycondensation reactor, and polycondensation reaction was conducted at 280°C under reduced pressure.

After the polycondensation reaction was completed, the reaction mixture was filtered through a NASLON filter having a 95% cut diameter of 5 $\mu$m, the product was extruded into a strand shape from the nozzle, and the strands were cooled and solidified using cooling water that had been previously filtered (pore size: 1 $\mu$m or less), and cut into pellets. The obtained polyethylene terephthalate resin (A) had an intrinsic viscosity of 0.62 dl/g and an oligomer content of 0.96% by mass, and did not substantially contain inert particles and internal precipitated particles. (Hereinafter abbreviated as PET resin (I).)

(Production of polyethylene terephthalate resin (II))

A polyethylene terephthalate resin (II) containing no silica particles and having an intrinsic viscosity of 0.62 dl/g was obtained in the production of PET (A). (Hereinafter abbreviated as PET resin (II).)

(Production of polyester resin (III) recycled from PET bottles)

Flakes obtained by crushing PET bottles for beverages from which foreign substances such as remaining beverages and labels had been removed were melted in an extruder. Even finer foreign substances were filtered out two times while the filter was changed to one having a finer opening size in order, and far finer foreign substances were filtered out through a filter having the smallest opening size of 50 $\mu$m for the third time. The filtrate was extruded into a strand shape from the nozzle, and the strands were cooled and solidified using cooling water that had been previously filtered (pore size: 1 $\mu$m or less), and cut into pellets to obtain polyester resin (III). The proportion of ester constituting units in the obtained polyester resin (III) is that terephthalic acid-derived ester constituting unit/isophthalic acid-derived ester constituting unit = 98.6/1.4 (mol%), and the limiting viscosity of the resin was 0.65 dl/g.

(Polymerization of urethane resin A having polycarbonate structure)

In a four-necked flask equipped with a stirrer, a Dimroth condenser, a nitrogen inlet tube, a silica gel drying tube, and a thermometer, 27.5 parts by mass of hydrogenated m-xylylene diisocyanate, 6.5 parts by mass of dimethylol propanoic acid, 61 parts by mass of polyhexamethylene carbonate diol having a number average molecular weight of 1800, 5 parts by mass of neopentyl glycol, and 84.00 parts by mass of acetone as a solvent were charged, and stirred at 75°C for 3 hours in a nitrogen atmosphere, and it was confirmed that the reaction liquid reached the predetermined amine equivalent weight. Next, 2.2 parts by mass of trimethylolpropane was charged, and the mixture was stirred at 75°C for 1 hour in a nitrogen atmosphere, and it was confirmed that the reaction liquid reached the predetermined amine equivalent weight. After the reaction liquid was cooled to 40°C, 5.17 parts by mass of triethylamine was added to obtain a polyurethane prepolymer solution. Next, 450 g of water was added to a reaction vessel equipped with a homodisper capable of high speed stirring, the temperature was adjusted to 25°C, and the polyurethane prepolymer solution was added and dispersed in the water while stirring and mixing was performed at 2000 min⁻¹. Thereafter, acetone and part of the water were removed under reduced pressure to prepare a water dispersible urethane resin solution (A) having a solid content of 34% by mass.

(Polymerization of blocked isocyanate crosslinking agent B)

In a flask equipped with a stirrer, a thermometer and a reflux condenser, 23.27 parts by mass of 3,5-dimethylpyrazole (dissociation temperature: 120°C, boiling point: 218°C) was added dropwise to 66.04 parts by mass of a polyisocyanate compound having an isocyanurate structure formed from hexamethylene diisocyanate (DURANATE TPA manufactured by Asahi Kasei Corporation) and 17.50 parts by mass of N-methylpyrrolidone, and the mixture was kept at 70°C for 1 hour in a nitrogen atmosphere. After that, 8.3 parts by mass of dimethylol propanoic acid was added dropwise. After the infrared spectrum of the reaction liquid was measured to confirm that the absorption of isocyanate group had disappeared, 5.59 parts by mass of N,N-dimethylethanolamine and 132.5 parts by mass of water were added to obtain a blocked polyisocyanate aqueous dispersion (B) having a solid content of 40% by mass. The blocked isocyanate crosslinking agent has four functional groups and an NCO equivalent weight of 280.

(Polymerization of polyester resin C)

In a stainless steel autoclave equipped with a stirrer, a thermometer, and a partial reflux condenser, 194.2 parts by mass of dimethyl terephthalate, 184.5 parts by mass of dimethyl isophthalate, 14.8 parts by mass of dimethyl 5-sulfoisophthalate sodium salt, 233.5 parts by mass of diethylene glycol, 136.6 parts by mass of ethylene glycol, and 0.2 parts by mass of tetra-n-butyl titanate were charged, and the transesterification reaction was conducted at a temperature of 160°C to 220°C over 4 hours. Next, the temperature was raised to 255°C, the pressure of the reaction system was gradually reduced, and then the reaction was conducted under a reduced pressure of 30 Pa for 1 hour and 30 minutes to obtain a copolyester resin (C). The obtained copolyester resin (C) was pale yellow and transparent. The reduced viscosity of the copolyester resin (C) was measured and confirmed to be 0.70 dl/g. The glass transition temperature by DSC was 40°C.

(Preparation of polyester aqueous dispersion Cw)

In a reactor equipped with a stirrer, a thermometer and a reflux device, 15 parts by mass of polyester resin (C) and 15 parts by mass of ethylene glycol n-butyl ether were charged, and heated and stirred at 110°C to dissolve the resin. After the resin was completely dissolved, 70 parts by mass of water was gradually added to the polyester solution while stirring was performed. After the addition, the liquid was cooled to room temperature while stirring was performed to prepare a milky white polyester aqueous dispersion (Cw) having a solid content of 15% by mass.

(Preparation of coating liquid D)

The following agents were mixed in a mixed solvent of water and isopropanol to prepare a coating liquid (D) having a solid mass ratio of urethane resin solution (A) /crosslinking agent (B)/polyester aqueous dispersion (Cw) of 25/26/49.

| | |
|---|---|
| Urethane resin solution (A) | 3.55 parts by mass |
| Crosslinking agent (B) | 3.16 parts by mass |
| Polyester aqueous dispersion (Cw) | 16.05 parts by mass |
| Particles | 0.47 parts by mass |

(Silica by drying process having average particle size of 200 nm, solid concentration of 3.5% by mass)

| | |
|---|---|
| Particles | 1.85 parts by mass |

(Silica sol having average particle size of 40 to 50 nm, solid concentration of 30% by mass)

Surfactant     0.30 parts by mass

(Silicone-based, solid concentration of 10% by mass)

(Preparation of copolyester resin aqueous dispersion (E))

In a reaction vessel, 95 parts by mass of dimethyl terephthalate, 95 parts by mass of dimethyl isophthalate, 35 parts by mass of ethylene glycol, 145 parts by mass of neopentyl glycol, 0.1 part by mass of zinc acetate, and 0.1 part by mass of antimony trioxide were charged, and the transesterification reaction was conducted at 180°C over 3 hours. Next, 6.0 parts by mass of 5-sulfoisophthalic acid sodium salt was added, and an esterification reaction was conducted at 240°C over 1 hour, and then polycondensation reaction was conducted at 250°C under reduced pressure (10 to 0.2 mmHg) over 2 hours to obtain a copolyester-based resin having a number average molecular weight of 19,500 and a softening point of 60°C.

A viscous melt was obtained by stirring 300 parts by mass of the obtained copolyester-based resin and 140 parts by mass of butyl cellosolve at 160°C for 3 hours, 560 parts by mass of water was gradually added to this melt, and after 1 hour, a uniform pale white copolyester resin aqueous dispersion (D) having a solid concentration of 30% was obtained.

(Preparation of coating liquid (F) for easy lubricating resin layer formation)

Mixed were, 15 parts by mass of a 30% by mass aqueous dispersion (E) of copolyester-based resin, 0.4 parts by mass of a 50% by mass aqueous solution of sodium dodecyl diphenyl oxide disulfonate, 0.5 parts by mass of a 40% by mass aqueous dispersion of polyethylene-based wax emulsion (molecular weight: 4,000), 51 parts by mass of water, and 30 parts by mass of isopropyl alcohol. Furthermore, a 10% by mass aqueous solution (0.3 parts by mass) of a fluorosurfactant (polyoxyethylene-2-perfluorohexylethyl ether), a 20% by mass aqueous dispersion (2.3 parts by mass) of colloidal silica (average particle size: 40 nm), and a 10% by mass aqueous dispersion (0.5 parts by mass) of benzoguanamine-based organic particles (average particle size: 2 $\mu$m) were added. Subsequently, the mixture was subjected to precision filtration through a felt-type polypropylene filter having a size of particles filtered (initial filtration efficiency of 95%) of 10 $\mu$m to prepare a coating liquid (F).

(Example 1)

The polyester resin (III) pellets were dried at 150°C for 8 hours under reduced pressure (3 Torr), then supplied into an extruder, and melted at 285°C. This polymer was filtered through a filter medium of stainless steel sintered body (nominal filtration accuracy: cutting 95% of 10 $\mu$m particles), and extruded into a sheet shape from the mouthpiece, and the sheet was brought into contact with a casting drum having a surface temperature of 30°C and cooled and solidified by an electrostatic casting method, thereby fabricating an unstretched film. This unstretched film was uniformly heated to 75°C using a heating roll, heated to 100°C using a non-contact heater, and subjected to 3. 3-fold roll stretching (longitudinal stretching) . Next, the coating liquid (D) was applied to the casting drum contact surface of the uniaxially stretched film, and the coating liquid (F) was applied to the opposite surface by a reverse kiss coating method so that the thicknesses of resin solids after drying were both 0.3 $\mu$m. The uniaxially stretched film having coating layers was guided to a tenter while being dried, heated to 140°C, and transversely stretched 4.0 times, the width of the film was fixed, heat treatment was performed at 240°C for 5 seconds, and the film was then relaxed at 210°C by 4% in the transverse direction to obtain a polyester film having a thickness of 188 $\mu$m.

Using the same sample as in Example 1, the film acid value distribution in the machine direction was evaluated. The results are presented in Table 3.

(Example 2)

A polyester film was obtained in the same manner as in Example 1 except that the film thickness after biaxial stretching was changed to 125 $\mu$m.

(Examples 3 and 4)

Polyester films having a thickness of 125 $\mu$m were obtained in the same manner as in Example 2 except that the configurations of the raw material polyester resins were changed to those presented in Table 1.

(Example 5)

The configuration of the raw material polyester resin was changed to that presented in Table 1. Specifically, for the formation of skin layer, the PET resin (I) pellets and the polyester resin (III) pellets were dried, then mixed at polyester resin (III) /PET resin (I) = 85% by mass/15% by mass, and melted at 285°C using a melt extruder separate from the core layer forming system. For the core layer forming system, polyester resin (III) pellets were dried and then melted at 285°C using a melt extruder. These polymers were filtered through a filter medium of stainless steel sintered body (nominal filtration accuracy: cutting 95% of 10 $\mu$m particles), joined in the feed block, and extruded into a sheet shape from the mouthpiece, and the sheet was brought into contact with a casting drum having a surface temperature of 30°C and cooled and solidified by an electrostatic casting method, thereby fabricating an unstretched film. The layer ratio of the unstretched film was adjusted to skin layer/core layer/skin layer = 9/82/9 by calculating the discharge rate of each extruder. This unstretched film was uniformly heated to 75°C using a heating roll, heated to 100°C using a non-contact heater, and subjected to 3.3-fold roll stretching (longitudinal stretching) . Next, the coating liquid (D) was applied to the casting drum contact surface of the uniaxially stretched film by a reverse kiss coating method so that the thickness of resin solid after drying was 0.3 $\mu$m. The uniaxially stretched film having a coating layer was guided to a tenter while being dried, heated to 140°C, and transversely stretched 4.0 times, the width of the film was fixed, heat treatment was performed at 240°C for 5 seconds, and the film was then relaxed at 210°C by 4% in the transverse direction to obtain a polyester film having a thickness of 50 $\mu$m.

(Example 6)

A laminated polyester film having a thickness of 50 $\mu$m was obtained in the same manner as in Example 5 except that the configuration of the raw material polyester resin was changed to that presented in Table 1.

(Example 7)

A polyester film was obtained in which an aluminum oxide deposited film (inorganic oxide deposited layer) having a thickness of 12 nm was formed on one surface of the polyester film obtained in the same manner as in Example 1 by a reactive resistance heating method as a vacuum deposition heating means .

(Condition for aluminum oxide deposition)

Degree of vacuum: $8.1 \times 10^{-2}$ Pa

(Comparative Example 1)

A polyester film having a thickness of 188 $\mu$m was obtained in the same manner as in Example 1 except that the configuration of the raw material polyester resin was changed to that presented in Table 2.

(Comparative Examples 2 and 3)

Polyester films having a thickness of 125 $\mu$m were obtained in the same manner as in Example 2 except that the configurations of the raw material polyester resins were changed to those presented in Table 2.

(Comparative Example 4)

A laminated polyester film having a thickness of 50 $\mu$m was obtained in the same manner as in Example 5 except that the configuration of the raw material polyester resin was changed to that presented in Table 2.

[Table 1]

| | Layer configuration of film | | | | | | Formation of coating layer | | Thickness of biaxially stretched film (μm) |
| | Skin layer 1 | | Core layer | | Skin layer 2 | | Casting drum contact surface side | Casting drum noncontact surface side | |
| | PET resin (I) (% by mass) | Polyester resin (III) (% by mass) | PET resin (II) (% by mass) | Polyester resin (III) (% by mass) | PET resin (I) (% by mass) | Polyester resin (III) (% by mass) | | | |
|---|---|---|---|---|---|---|---|---|---|
| Example 1 | | | | 100 | | | Coating liquid (D) | Coating liquid (F) | 188 |
| Example 2 | | | | 100 | | | Coating liquid (D) | Coating liquid (F) | 125 |
| Example 3 | | | 10 | 90 | | | Coating liquid (D) | Coating liquid (F) | 125 |
| Example 4 | | | 20 | 80 | | | Coating liquid (D) | Coating liquid (F) | 125 |
| Example 5 | 1.35 | 7.65 | | 82 | 1.35 | 7.65 | Coating liquid (D) | - | 50 |
| Example 6 | 1.35 | 7.65 | 10 | 72 | 1.35 | 7.65 | Coating liquid (D) | - | 50 |
| Comparative Example 1 | | | 70 | 30 | | | Coating liquid (D) | Coating liquid (F) | 188 |
| Comparative Example 2 | | | 70 | 30 | | | Coating liquid (D) | Coating liquid (F) | 125 |
| Comparative Example 3 | | | 100 | | | | Coating liquid (D) | Coating liquid (F) | 125 |
| Comparative Example 4 | 1.35 | 7.65 | 82 | | 1.35 | 7.65 | Coating liquid (D) | - | 50 |

[Table 2]

| | Content rate of ester constituting unit derived from specific dicarboxylic component to all ester constituting units of polyester [mol%] | | Amount of change in haze (ΔHz) [%] | Limiting viscosity [dl/g] | 150°C storage modulus ×10$^8$ [Pa] | | | Mold formability | Acid value (AV) [eq/ton] | Close adhesive properties to UV ink [%] |
|---|---|---|---|---|---|---|---|---|---|---|
| | TPA-derived constitutional unit | IPA-derived constitutional unit | | | MD | TD | Average | | | |
| Example 1 | 98.6 | 1.4 | 0.03 | 0.62 | 8.41 | 6.59 | 7.50 | ○ | 54.7 | 100 |
| Example 2 | 98.6 | 1.4 | 0.00 | 0.62 | 8.31 | 6.51 | 7.41 | ○ | 54.5 | 100 |
| Example 3 | 98.7 | 1.3 | 0.91 | 0.62 | 8.35 | 6.55 | 7.45 | ○ | 50.1 | 100 |
| Example 4 | 98.9 | 1.1 | 1.81 | 0.61 | 8.41 | 6.59 | 7.50 | ○ | 47.9 | 100 |
| Example 5 | 98.6 | 1.4 | 0.03 | 0.62 | 7.22 | 5.56 | 6.39 | ○ | 53.3 | 100 |
| Example 6 | 98.8 | 1.2 | 0.91 | 0.62 | 7.46 | 5.74 | 6.60 | ○ | 49.2 | 100 |
| Comparative Example 1 | 99.6 | 0.4 | 6.35 | 0.59 | 8.97 | 7.03 | 8.00 | △ | 39.1 | 77 |
| Comparative Example 2 | 99.6 | 0.4 | 6.35 | 0.59 | 8.86 | 6.94 | 7.90 | △ | 38.8 | 75 |
| Comparative Example 3 | 100.0 | 0.0 | 9.10 | 0.58 | 8.55 | 7.71 | 8.13 | × | 34.3 | 50 |
| Comparative Example 4 | 99.8 | 0.2 | 7.44 | 0.59 | 8.70 | 6.70 | 7.70 | △ | 36.2 | 68 |

TPA: Terephthalic acid IPA: Isophthalic acid
MD: Machine direction TD: Transverse direction

[Table 3]

| | Machine direction acid value (AV) measurement position [m] | Acid value (AV) [eq/ton] | Maximum acid value (AV) [eq/ton] | Minimum acid value (AV) [eq/ton] | Maximum-minimum acid value (AV) [eq/ton] |
|---|---|---|---|---|---|
| Example 1B | 2000 | 54.9 | 55.7 | 53.8 | 1.9 |
| | 4000 | 54.7 | | | |
| | 6000 | 53.8 | | | |
| | 8000 | 55.7 | | | |
| | 10000 | 54.1 | | | |

INDUSTRIAL APPLICABILITY

According to the polyester film of the present invention, it is possible to suppress a decrease in appearance quality and a decrease in productivity due to mold contamination since the polyester film is excellent in thermoformability as well as oligomer precipitation (whitening) less occur even under heating during forming and in the coating step of an adhesive resin and the like. In addition, since the polyester film is also excellent in elasticity, it is possible to provide a polyester film that is suitably used for formed products that are required to maintain their shapes, various POP adhesive labels with an upright display portion, and the like.

**Claims**

1. A biaxially oriented polyester film that satisfies the following (1) to (4):

   (1) a content rate of an ester constituting unit derived from an isophthalic acid component is 0.5 mol% or more and 5.0 mol% or less with respect to 100 mol% of all ester constituting units in all polyester resins constituting the biaxially oriented polyester film;
   (2) an amount of change in haze of the film, $\Delta$haze {$\Delta$haze = (haze after heating) - (haze before heating) } is 5.0% or less when the film is heated at 150°C for 30 minutes;
   (3) a limiting viscosity of the polyester film is 0.59 dl/g or more and 0.65 dl/g or less;
   (4) a storage modulus at 150°C is $5.0 \times 10^8$ [Pa] or more and $7.6 \times 10^8$ [Pa] or less as an average value of storage moduli in a machine direction and a transverse direction of the film when the polyester film having a width of 5 mm is gripped at an interval of 30 mm and measurement is performed using a dynamic viscoelasticity measuring instrument under conditions of a tensile mode, a frequency of 10 Hz, and a rate of temperature increase of 5°C/min; and
   (5) the biaxially oriented polyester film has an acid value of 40 eq/ton or more and 60 eq/ton or less.

2. The biaxially oriented polyester film according to claim 1, wherein a polyester resin recycled from PET bottles is contained at 50% by mass or more and 100% by mass or less with respect to 100% by mass of all polyester resins contained in the film.

3. The biaxially oriented polyester film according to claim 1 or 2, comprising a resin layer containing at least one resin selected from a polyester-based resin, a polyurethane-based resin, or an acrylic resin on at least one surface of the polyester film.

4. The biaxially oriented polyester film according to any one of claims 1 to 3, wherein a change in film oxidation per 10,000 m in a machine direction is 2 eq/ton or less.

5. A formed product comprising the biaxially oriented polyester film according to any one of claims 1 to 4.

6. An adhesive label comprising an adhesive layer on at least one surface of the biaxially oriented polyester film according to any one of claims 1 to 4.

7. A label comprising an aluminum deposited layer on at least one surface of the biaxially oriented polyester film according to any one of claims 1 to 4.

## INTERNATIONAL SEARCH REPORT

| International application No. |
| --- |
| **PCT/JP2021/035984** |

| | |
| --- | --- |
| **A.** | **CLASSIFICATION OF SUBJECT MATTER** |

*B32B 9/00*(2006.01)i; *B32B 27/36*(2006.01)i; *G09F 3/02*(2006.01)i; *G09F 3/10*(2006.01)i; *C08J 5/18*(2006.01)i; *C08J 7/043*(2020.01)i
FI: C08J5/18 CFD; C08J7/043; G09F3/02 G; G09F3/10 A; B32B27/36; B32B9/00 A

According to International Patent Classification (IPC) or to both national classification and IPC

| | |
| --- | --- |
| **B.** | **FIELDS SEARCHED** |

Minimum documentation searched (classification system followed by classification symbols)

B32B9/00; B32B27/36; G09F3/02; G09F3/10; C08J5/18; C08J7/043

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | JP 2019-127536 A (TOYOBO CO., LTD.) 01 August 2019 (2019-08-01) claims, paragraphs [0040]-[0064], examples | 1-6 |
| Y | | 3, 6, 7 |
| X | JP 2017-210002 A (TOYOBO CO., LTD.) 30 November 2017 (2017-11-30) claims, paragraphs [0021], [0081]-[0106], examples | 1, 2, 4, 5, 7 |
| Y | | 3, 6, 7 |
| X | JP 2017-149987 A (TOYOBO CO., LTD.) 31 August 2017 (2017-08-31) claims, paragraphs [0067]-[0097], examples | 1, 2, 4, 5 |
| Y | | 3, 6, 7 |

☐ Further documents are listed in the continuation of Box C.      ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **16 November 2021** | **30 November 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2021/035984**

| Patent document cited in search report | | | Publication date (day/month/year) | Patent family member(s) | | | Publication date (day/month/year) |
|---|---|---|---|---|---|---|---|
| JP | 2019-127536 | A | 01 August 2019 | (Family: none) | | | |
| JP | 2017-210002 | A | 30 November 2017 | JP | 2017-222180 | A | |
| | | | | WO | 2015/146496 | A1 | |
| | | | | TW | 201544319 | A | |
| JP | 2017-149987 | A | 31 August 2017 | JP | 2014-80595 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004075713 A
- JP 2005068238 A
- JP 2005186364 A